(19) Europäisches Patentamt

European Patent Office

Office européen des brevets

(11) Numéro de publication : **0 041 272**
**B1**

(12) **FASCICULE DE BREVET EUROPÉEN**

(45) Date de publication du fascicule du brevet :
28.08.85

(21) Numéro de dépôt : **81104269.6**

(22) Date de dépôt : **03.06.81**

(51) Int. Cl.⁴ : **F 24 D 11/00, F 24 D 11/02**

(54) Installation de chauffage notamment pour le chauffage de locaux et pour la production d'eau chaude sanitaire.

(30) Priorité : 04.06.80 FR 8012461

(43) Date de publication de la demande :
09.12.81 Bulletin 81/49

(45) Mention de la délivrance du brevet :
28.08.85 Bulletin 85/35

(84) Etats contractants désignés :
AT BE CH DE FR IT LI LU NL

(56) Documents cités :
DE-A- 2 638 834
DE-A- 2 839 258
FR-A- 2 261 486
FR-A- 2 279 038
FR-A- 2 424 490

(73) Titulaire : Picchiottino, André Alain
7, Chemin des Maraîchers
Tresserve F-73100 Aix-les-Bains (FR)

(72) Inventeur : Picchiottino, André Alain
7, Chemin des Maraîchers
Tresserve F-73100 Aix-les-Bains (FR)

(74) Mandataire : Casalonga, Axel et al
BUREAU D.A. CASALONGA OFFICE JOSSE & PETIT
Baaderstrasse 12-14
D-8000 München 5 (DE)

Jouve, 18, rue St-Denis, 75001 Paris, France

## Description

La présente invention concerne une installation de chauffage notamment pour le chauffage de locaux et pour la production d'eau chaude sanitaire utilisant une source de chaleur de préférence naturelle.

Différentes installations de ce type ont déjà été proposées. Cependant, ces installations connues ont une structure compliquée et nécessitent un nombre important de conduits et de vannes si bien que leur prix reste très élevé. De plus, les transferts de chaleur possibles sont limités. En particulier, le brevet DE-A-2 839 258 décrit une installation de chauffage dans laquelle aucun échange de chaleur n'est possible depuis les capteurs solaires et le moyen de stockage, cumulés, vers le système à diffusion de chaleur ou vers l'eau sanitaire. En outre, dans cette installation connue, une source de chaleur auxiliaire constituée par une résistance chauffante électrique, qui engendre une consommation en énergie électrique importante, est prévue.

La présente invention a pour but de remédier notamment à ces inconvénients et propose une installation de chauffage présentant une structure très simple tout en permettant des échanges de chaleur entre tous les éléments formant cette installation.

L'installation de chauffage selon la présente invention, notamment pour la production de chaleur dans un système à diffusion de chaleur, par exemple pour le chauffage de locaux, et pour la production d'eau chaude sanitaire stockée dans un ballon, comprend au moins une source de chaleur et au moins une source de chaleur auxiliaire et au moins un moyen pour le stockage de chaleur pouvant être restituée ultérieurement.

La source de chaleur peut être formée par de l'eau chaude, une pompe à chaleur, un échangeur géothermique ou tout autre récupérateur de chaleur. Mais elle sera de préférence formée par des capteurs solaires. Le moyen de stockage de chaleur peut être formée par des capteurs solaires. Le moyen de stockage de chaleur peut être formé par un ballon contenant un volume relativement important d'eau, une masse de terre ou par tout autre moyen capable de retenir la chaleur.

L'installation de chauffage selon la présente invention comprend un conduit formant une boucle dans laquelle un fluide caloporteur tel que de l'eau mis en mouvement en circuit fermé peut circuler dans un sens, ce conduit en forme de boucle présentant une première portion aux extrémités de laquelle est branché en dérivation un conduit permettant audit fluide d'être associé thermiquement à ladite source de chaleur en vue de faire circuler ledit fluide soit dans ladite première portion soit dans ce conduit de dérivation et une seconde portion disposée dans le sens de circulation du fluide dans ladite boucle en aval de ladite première portion et aux extrémités de laquelle est branché en dérivation un conduit permettant audit fluide d'être associé thermiquement audit moyen de stockage en vue de faire circuler ledit fluide soit dans ladite seconde portion soit dans ce conduit de dérivation, une pompe entraînant ledit fluide caloporteur étant montée sur ledit conduit formant une boucle en un endroit de ce conduit où le fluide est continuellement en circulation lors des transferts de chaleur.

Conformément à la présente invention, ladite boucle comprend en outre une troisième portion située entre lesdites première et seconde portions en aval de ladite seconde portion, un conduit permettant audit fluide d'être associé thermiquement audit système à diffusion de chaleur étant branché sur ledit conduit formant une boucle en parallèle ou en dérivation à ladite troisième portion pour que le fluide puisse circuler dans ladite troisième portion et/ou dans ledit conduit associé audit système à diffusion de chaleur, ladite troisième portion étant associé thermiquement à l'eau sanitaire dudit ballon en vue d'échanges de chaleur entre le fluide circulant dans la troisième portion de ladite boucle et l'eau sanitaire du ballon quand ledit fluide circule dans ladite troisième portion.

Conformément à la présente invention, ladite source de chaleur auxiliaire est formée par une pompe à chaleur dont le condenseur est associé thermiquement à l'eau sanitaire et dont l'évaporateur est associé thermiquement audit fluide par l'intermédiaire d'un conduit branché sur ledit conduit formant une boucle d'une part entre ladite seconde portion du conduit formant une boucle et la jonction entre ce conduit formant une boucle et le conduit associé thermiquement au système à diffusion de chaleur la plus proche et d'autre part entre l'autre jonction entre le conduit formant une boucle et le conduit associé thermiquement au système à diffusion de chaleur et ladite première portion du conduit formant une boucle.

Dans une variante de réalisation selon la présente invention, ladite troisième portion de ladite boucle forme avec un conduit ou circuit de circulation extérieur audit ballon un échangeur de chaleur en vue d'échanges de chaleur entre le fluide circulant dans ladite troisième portion et l'eau sanitaire, une pompe étant montée sur ledit conduit ou circuit d'eau sanitaire extérieur au ballon pour la mise en mouvement de l'eau sanitaire dans ledit échangeur. Selon la présente invention, ledit condenseur peut être branché sur ledit conduit de circulation.

Dans une autre variante de réalisation, selon la présente invention, ladite troisième portion est disposée à l'intérieur dudit ballon en vue d'échanges de chaleur entre l'eau et ledit fluide et un conduit de dérivation est branché aux extrémités de cette troisième portion en vue de faire circuler ledit fluide soit dans ce conduit de dérivation soit dans ladite troisième portion.

Dans cette variante, ledit ballon comprend de préférence une cloison intérieure délimitant deux compartiments dont l'un comprend ledit condenseur et dont l'autre comprend ladite troisième portion, ladite cloison permettant un mouvement réciproque de l'eau d'un compartiment à l'autre par thermosyphon à l'intérieur dudit ballon. Dans une réalisation, ces compartiments intérieurs dudit ballon communiquent à leur partie inférieure et à leur partie supérieure.

Selon la présente invention, une vanne du type à deux directions de circulation et à trois voies est de préférence montée à l'une des jonctions entre ledit conduit formant une boucle et ledit conduit associé thermiquement à l'évaporateur de la pompe à chaleur dans le but de faire circuler ledit fluide soit dans ladite troisième portion soit dans un conduit associé à l'évaporateur de la pompe à chaleur.

Selon la présente invention, les branches dudit conduit associé thermiquement à l'évaporateur de la pompe à chaleur qui sont extérieures à cet évaporateur sont de préférence reliées par un conduit de retour direct sur lequel est montée une vanne pilotée par la température de l'évaporateur afin de maintenir cette température à une valeur convenable, une pompe entraînant ledit fluide étant disposée sur ledit conduit associé thermiquement à l'évaporateur de la pompe à chaleur entre l'une des jonctions entre ce conduit et le conduit de retour direct et l'évaporateur de la pompe à chaleur.

Selon la présente invention, ledit système à diffusion de chaleur est de préférence formé par des éléments montés sur le conduit associé à ce système, un conduit de retour direct étant branché sur ce conduit en parallèle dudit système, une vanne mélangeuse étant installée à l'une des jonctions entre ledit conduit associé audit système et ce conduit de retour direct et une pompe entraînant ledit fluide étant disposée sur ledit conduit associé audit système entre la jonction entre ledit conduit de retour direct et le conduit associé audit système et ledit système.

Selon la présente invention, on prévoit de préférence des sondes de température pour mesurer notamment la température de la source de chaleur, la température du moyen de stockage, la température du fluide juste en amont de ladite première portion, la température à l'entrée du système à diffusion de chaleur et la température de l'eau sanitaire dans ledit ballon, en vue de commander grâce à un dispositif électrique ou électronique automatique, les vannes et les pompes de l'installation de chauffage pour effectuer les transferts de chaleur désirés et possibles.

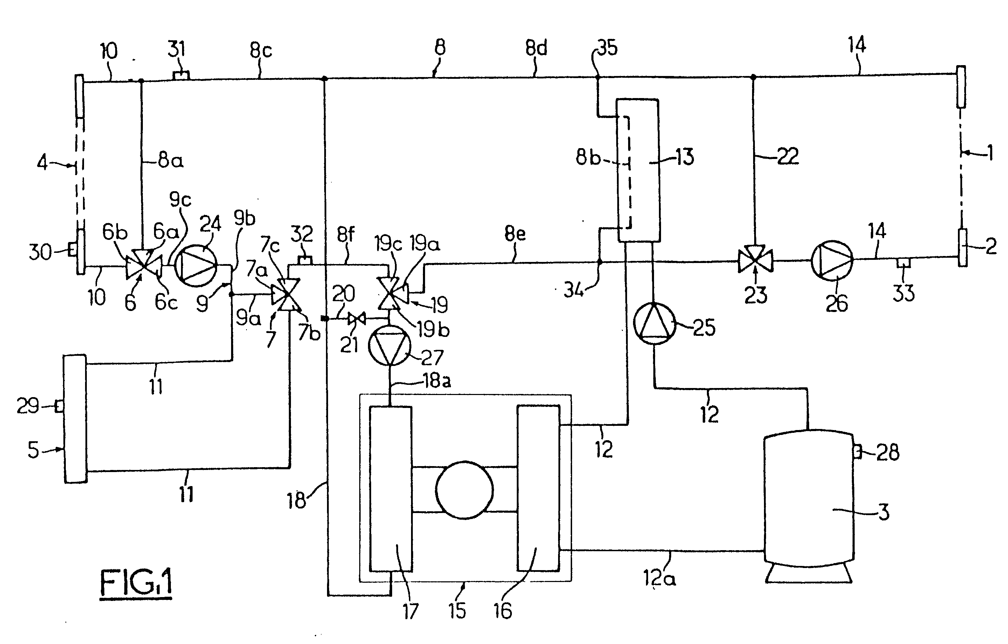

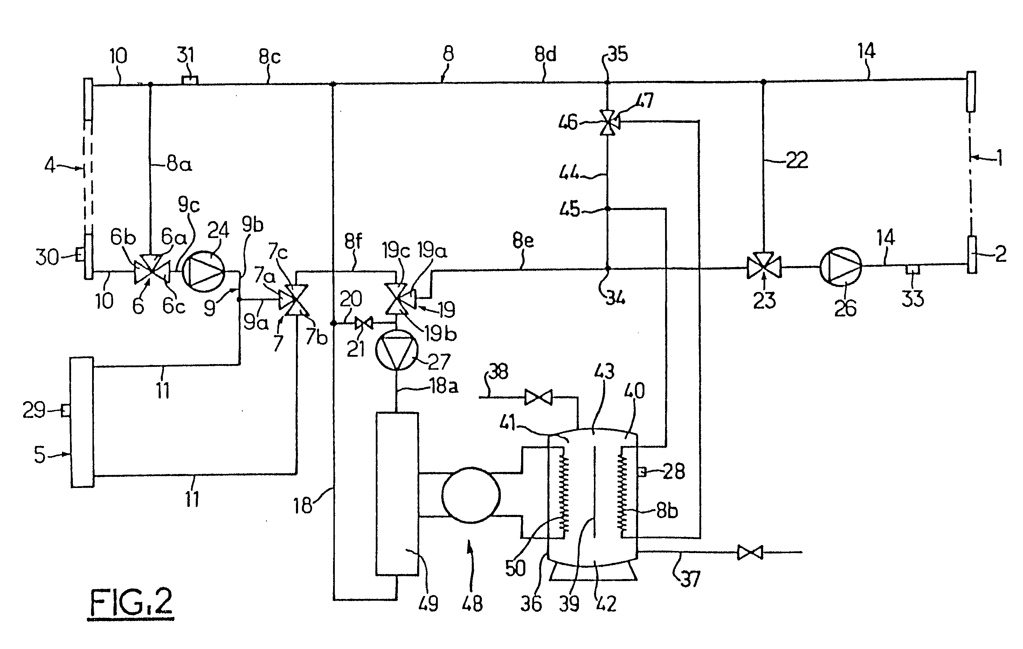

La présente invention sera mieux comprise à l'étude de deux variantes de réalisation de l'installation de chauffage selon la présente invention décrites à titre d'exemples non limitatifs et illustrés schématiquement par les figures 1 et 2.

On va tout d'abord décrire la structure et le fonctionnement de l'installation de chauffage représenté sur la figure 1.

L'installation de chauffage représentée sur la figure 1 est destinée à la production de chaleur dans un système à diffusion de la chaleur repéré d'une manière générale par la référence 1 et formé par exemple par des panneaux de sol 2 prévus pour le chauffage de locaux et pour la production d'eau chaude sanitaire stockée dans un ballon repéré par la référence 3. Le système à diffusion de la chaleur pourrait également être formé par des radiateurs ou autres éléments de chauffage.

L'installation de chauffage comprend une source de chaleur formée par des capteurs solaires repérés dans leur ensemble par la référence 4 et un moyen pour le stockage de chaleur qui peut être restituée ultérieurement. Ce moyen de stockage est repéré d'une manière générale par la référence 5 et peut être formé d'une manière classique, par un ballon rempli d'eau ou par un volume de terre traversé par des canalisations ou une combinaison de ces deux moyens.

Dans l'exemple représenté sur la figure 1, le fluide caloporteur utilisé pour le transfert de la chaleur est formé par de l'eau.

L'installation de chauffage représenté sur la figure 1 comprend une première vanne répérée d'une manière générale par la référence 6 et une seconde vanne repérée d'une manière générale par la référence 7. Ces vannes 6 et 7 sont du type à trois voies et comprennent deux entrées respectivement 6a, 6b et 7a, 7b, et une sortie, respectivement 6c et 7c. La sortie 7c de la vanne 7 est reliée à l'entrée 6a de la vanne 6 par un conduit formant une première branche repérée d'une manière générale par la référence 8. La sortie 6c de la vanne 6 est reliée à l'entrée 7a de la vanne 7 par un conduit formant une deuxième branche repérée d'une manière générale par la référence 9. Les branches 8 et 9 permettent, avec les vannes 6 et 7, de former une boucle.

La branche 8 comprend une partie 8a adjacente à la vanne 6 et formant une première portion de la boucle formée par les branches 8 et 9 aux extrémités de laquelle est branché en dérivation un conduit 10 qui permet à l'eau de transfert de chaleur d'être associée thermiquement au capteur solaire 4. Ce conduit 10 est branché d'une part sur la branche 8 à l'extrémité de sa partie 8a et d'autre part sur l'entrée 6b de la vanne 6. Ce conduit 10 peut être formé en plusieurs parties selon le montage des capteurs solaires 4.

La branche 9 comprend une partie 9a adjacente à la vanne 7 et formant une seconde portion de la boucle formée par les branches 8 et 9 aux extrémités de laquelle est branché en dérivation un conduit 11 qui permet à l'eau de transfert de chaleur d'être associée thermiquement au moyen de stockage 5. Ce conduit 9a est branché d'une part sur la branche 9 à l'extrémité de sa partie 9a et d'autre part sur l'entrée 7b de la vanne 7 et peut être formé de plusieurs parties selon la structure du moyen de stockage 5.

La branche 8 comprend une partie 8b située entre la vanne 7 et la partie 8a et formant une troisième portion de la boucle formée par les branches 8 et 9. Cette partie 8b peut être associée thermiquement à l'eau sanitaire stockée dans le ballon 3 grâce à un conduit 12 extérieur au ballon 3 de manière à former un échangeur de chaleur 13. La partie 8b peut avantageusement se présenter sous la forme d'un serpentin.

Un conduit 14 branché sur la branche 8 en parallèle à sa partie 8b en des points de jonction 34 et 35 permet à l'eau de transfert de chaleur d'être thermiquement associée au système à diffusion de la chaleur 1, ce conduit 14 étant tel qu'il permet le montage convenable des panneaux de sol 2. La branche 8 comprend alors deux parties 8c, 8d reliant le point de jonction 35 et la portion 8a et deux parties 8e et 8f reliant le point de jonction 34 à la vanne 19.

La branche 9 comprend deux parties 9b, 9c qui relient la partie 9a à la sortie 6c de la vanne 6.

L'installation de chauffage représentée sur la figure 1 comprend en outre une source de chaleur auxiliaire formée par une pompe à chaleur repérée d'une manière générale par la référence 15 et thermiquement associée au conduit de retour 12a de l'eau sanitaire allant de l'échangeur 13 au ballon 3.

Le condenseur 16 de la pompe à chaleur 15 est thermiquement associé au conduit de retour 12a. L'évaporateur 17 de la pompe à chaleur 15 est thermiquement associé à un conduit 18 relié à l'évaporateur 17 et branché d'une part sur la branche 8 entre ses parties 8c et 8d et d'autre part à la sortie 19b d'une vanne à trois voies 19 du même type que les vannes 6 et 7, cette vanne 19 étant par ailleurs montée sur la branche 8 entre la vanne 7 et sa partie 8b et plus précisément entre les parties 8f et 8e de telle sorte que son entrée 19c reliée à la partie 8f soit du côté de la sortie 7c de la vanne 7 et son autre sortie 19a reliée à la partie 8e soit du côté de la partie 8b de la branche 8.

Afin de maximiser le rendement de la pompe à chaleur 15, on prévoit en dérivation sur la portion du conduit 18 qui est extérieure à l'évaporateur 17 un conduit de retour direct 20 relié à la portion 18a branchée entre la sortie 19b et l'évaporateur 17. Le conduit 20 comprend une vanne 21 qui est pilotée par la température de l'évaporateur afin de maintenir cette température à une valeur convenable.

Comme on peut le voir sur la figure 1, on relie les deux branches du conduit 14 par un conduit 22 monté en parallèle du système à diffusion de chaleur 2. Une vanne mélangeuse 23 à trois voies est installée à l'une des connexions entre le conduit 14 et le conduit 22. Ainsi, on peut faire recirculer une partie de l'eau traversant les radiateurs afin de ne consommer que la quantité de chaleur nécessaire.

Afin de faire circuler l'eau dans les différents conduits, on a prévu une pompe 24 sur la branche 9 entre la vanne 6 et sa partie 9a, et plus précisément entre les parties 9c et 9b une pompe 25 sur le conduit 12 entre le ballon 3 et l'échangeur 13, une pompe 26 sur le conduit 14 entre la vanne mélangeuse 23 et le système à diffusion de chaleur 1 et une pompe 27 sur le conduit 18a entre le branchement du conduit 20 et l'évaporateur 17.

On va maintenant décrire les principaux modes de circulation de l'eau de transfert de chaleur et les échanges de chaleur possibles à partir de ces modes de circulation dans l'exemple représenté sur la figure 1.

Un premier mode de circulation consiste à faire circuler l'eau dans le conduit 10 et les capteurs solaires 4 associés et dans la boucle formée par les branches 8 et 9 en évitant la partie 8a de la branche 8. Pour cela, la vanne 6 est passante entre son entrée 6b et sa sortie 6c, la vanne 7 est passante entre son entrée 7a et sa sortie 7c, la vanne 19 est passante entre son entrée 19c et sa sortie 19a et la vanne 23 est non passante.

Un deuxième mode de circulation consiste à faire circuler l'eau dans le conduit 11 et le moyen de stockage 5 qui lui est associé et dans la boucle formée par les branches 8 et 9 en évitant la partie 9a de la branche 9. Pour cela, la vanne 6 est passante entre son entrée 6a et sa sortie 6c, la vanne 7 est passante entre son entrée 7b et sa sortie 7c et la vanne 19 est passante entre son entrée 19c et sa sortie 19a et la vanne 23 est non passante.

Un troisième mode de circulation consiste à faire circuler l'eau dans le conduit 10 et les capteurs solaires 4 qui lui sont associés, dans le conduit 11 et le moyen de stockage 5 qui lui est associé et dans la boucle formée par les branches 8 et 9 en évitant la partie 8a de la branche 8 et la partie 9a de la branche 9. Pour cela, la vanne 6 est passante entre son entrée 6b et sa sortie 6c, la vanne 7 est passante entre son entrée 7b et sa sortie 7c, la vanne 19 est passante entre son entrée 19c et sa sortie 19a et la vanne 23 est non passante.

Dans ces trois cas, la pompe 24 permet l'entraînement de l'eau.

Le troisième mode de circulation indiqué ci-dessus convient pour le transfert direct de chaleur du capteur solaire 4 au moyen de stockage 5. On notera que, dans ce cas, la partie 8b de la branche 8 sert uniquement de conduit.

A partir de l'un de ces trois premiers modes de circulation, il est possible de chauffer l'eau du ballon 3 et d'utiliser le système à diffusion de la chaleur 1, séparément ou conjointement. On notera que dans le troisième mode de circulation on peut en même temps chauffer le moyen de stockage ou prendre sa chaleur en fonction des échanges possibles et désirés.

En effet, pour réchauffer l'eau du ballon 3, on actionne la pompe 25 qui fait circuler l'eau contenue dans le ballon 3 dans l'échangeur 13, le conduit 12a traversant le condenseur 16 de la pompe à chaleur 15 servant uniquement de conduit et non d'échangeur.

Pour la production de chaleur grâce au système à diffusion de chaleur 1, on actionne la pompe 26 et la vanne 23 mélangeuse permet une circulation convenable de l'eau de transfert de chaleur dans le système à diffusion de la chaleur 1 avec retour direct possible par le conduit 22.

Un quatrième mode de circulation consiste à faire circuler l'eau de transfert de chaleur dans les capteurs 4 et dans l'évaporateur 17. Pour cela, la vanne 16 est passante entre son entrée 6b et sa sortie 6c, la vanne 7 est passante entre son entrée 7a et sa sortie 7c et la vanne 19 est passante entre son entrée 19c et sa sortie 19b. L'eau circule alors dans le conduit 10 et les capteurs 4 qui lui sont associés dans le conduit 18 associé à l'évaporateur 17 de la pompe à chaleur 15 et dans la boucle formée par les branches 8 et 9 en évitant sa partie 8a et sa partie 8b.

Un cinquième mode de circulation consiste à faire circuler l'eau de transfert de chaleur dans le moyen de stockage 5 et dans l'évaporateur 17 de la pompe à chaleur 15. Pour cela, la vanne 6 est passante entre son entrée 6a et sa sortie 6c, la vanne 7 est passante entre son entrée 7b et sa sortie 7c et la vanne 19 est passante entre son entrée 19c et sa sortie 19b. L'eau circule alors dans le conduit 11 et le moyen de stockage 5 qui lui est associé, dans le conduit 18 associé à l'avaporateur 17 et dans la boucle formée par les branches 8 et 9 en évitant la partie 9a de la branche 9 et la partie 8b de la branche 8.

Un sixième mode de circulation consiste à faire circuler l'eau de transfert de chaleur dans les capteurs de chaleur 4, le moyen de stockage 5 et l'évaporateur 17 de la pompe à chaleur 15. Pour cela, la vanne 6 est passante entre son entrée 6b et sa sortie 6c, la vanne 7 est passante entre son entrée 7b et sa sortie 7c et la vanne 19 est passante entre son entrée 19c et sa sortie 19b. L'eau circule alors dans le conduit 10 et les capteurs solaires 4 qui lui sont associés, dans le conduit 11 et le moyen de stockage 5 qui lui est associé, dans le conduit 18 associé à l'évaporateur 17 de la pompe à chaleur 15 et dans la boucle formée par les branches 8 et 9 en évitant les parties 8a et 8b de la branche 8 et la partie 9a de la branche 9.

Dans ces trois derniers modes de circulation, l'eau de transfert de chaleur est entraînée par la pompe 24 et peut en outre être entraînée par la pompe 27 qui crée alors une circulation de retour direct à l'évaporateur dans le conduit 20. A partir de ces quatrième, cinquième et sixième modes de circulation, il est possible d'échauffer la température de l'eau sanitaire contenue dans le ballon 3 ou d'utiliser le système à diffusion de chaleur 1 ou les deux à la fois, en faisant fonctionner la pompe à chaleur 15.

En effet, pour échauffer l'eau contenue dans le ballon 3, il suffit d'actionner la pompe 25 qui fait alors circuler l'eau dans le condenseur 16 par le conduit 12, l'échangeur 13 n'ayant dans ce cas aucune fonction de transfert de chaleur mais servant uniquement de conduit.

Pour la production de chaleur dans le système à diffusion de chaleur 1, il suffit d'actionner la pompe 26, ainsi que la vanne mélangeuse 23. L'eau circule alors dans la boucle formée par le conduit 14 et la partie 8b de la branche 8. En faisant fonctionner la pompe 25, on peut obtenir un échange de chaleur entre le condenseur 16 de la pompe à chaleur 15 et le système à diffusion de chaleur 1 par l'intermédiaire de l'échangeur 13 dans lequel un échange de chaleur se produit entre l'eau sanitaire contenue dans le ballon 3 et circulant dans le conduit 12 et l'eau circulant dans la partie 8b de la branche 8 associée dans ce cas au système à diffusion de chaleur 1.

On peut noter en outre que le sixième mode de circulation tel que décrit ci-dessus permet non seulement, comme on l'a vu, d'échauffer l'eau sanitaire du ballon 3, d'utiliser le système à diffusion de chaleur ou les deux à la fois mais également et en même temps de chauffer le moyen de stockage 5 si cela est possible ou de récupérer sa chaleur.

Compte tenu de la structure de l'installation de chauffage décrite ci-dessus, les modes de circulation et les échanges de chaleur possibles qui viennent d'être indiqués ne peuvent être considérés comme limitatifs. D'autres modes de circulation et d'autres échanges de chaleur sont envisageables, notamment en combinant les modes de circulation et les échanges de chaleur ci-dessus.

Afin de mettre en œuvre l'installation de chauffage qui vient d'être décrite, on prévoiera de préférence un dispositif électrique ou électronique pour la commande convenable des vannes 6, 7, 19, 21, 23, des pompes 24, 25, 26 et 27 et de la pompe à chaleur 15, en fonction des modes de circulation des fluides désirés. Ce dispositif électrique ou électronique de commande de l'installation pourra être automatisé et on pourra choisir le mode de circulation des fluides en fonction de la température des différents éléments de l'installation et/ou en fonction de différences de température existant entre ces éléments en vue des transferts de chaleur possibles et souhaités.

Dans ce but, on peut prévoir une sonde de température 28 installée sur le ballon 3, cette sonde de température 28 permettant de commander l'installation dans le but d'élever la température de l'eau contenue dans le ballon 3 entre deux seuils relativement espacés.

On peut également prévoir une sonde de température 29 dans le moyen de stockage 5 et une sonde de température 30 dans la source de chaleur formée ici par des capteurs solaires 4 et de mesurer la différence de température entre le moyen de stockage 5 et les capteurs solaires 4 pour savoir si un transfert de chaleur des capteurs solaires 4 en direction du moyen de stockage 5 est possible.

On peut également prévoir une sonde de température 31 montée sur la branche 8 en amont de sa partie 8a et de mesurer la différence entre la température fournie par cette sonde 31 et la température fournie par la sonde 30 afin de savoir si les capteurs solaires 4 peuvent fournir de la chaleur à l'installation.

On peut en outre prévoir une sonde de température 32 disposée sur la branche 8 à la sortie 7c de la vanne 7 et une sonde de température 33 disposée sur le conduit 14 à l'entrée du système à diffusion de chaleur 1, la différence entre les températures mesurées par ces sondes 32 et 33 permettant de commander, si besoin est, la pompe à chaleur 15 et la pompe 27.

Le dispositif de commande peut être soumis à d'autres températures telles que par exemple la température extérieure.

On va maintenant décrire l'installation de chauffage représentée sur la figure 2.

Cette installation de chauffage présente une grande partie de sa structure semblable à l'installation de chauffage représentée sur la figure 1. C'est pourquoi, on a conservé les mêmes références pour les éléments et parties communes à ces deux installations.

On voit en effet que l'installation représentée sur la figure 2 comprend une boucle formée par les branches 8 et 9. Cette boucle comprend une portion 8a aux extrémités de laquelle est branché en dérivation un conduit 10 associé thermiquement aux capteurs solaires 4, une portion 9a en aval de ladite portion 8a aux extrémités de laquelle est branché en dérivation un conduit 11 associé thermiquement au moyen de stockage 5, une portion 8b disposée entre les portions 8a et 9a en aval de la portion 9a et un conduit 14 associé thermiquement au système à diffusion de chaleur 1 et branché en parallèle à la portion 8b sur la branche 8 de la boucle en des points référencés 34 et 35 de telle sorte que le point 35 soit du côté de la portion 8a.

De la même manière que précédemment, sont prévus une vanne à trois voies 6 à l'une des extrémités de la portion 8a, une vanne à trois voies 7 à l'une des extrémités de la portion 9a, un conduit de retour direct 22 monté en parallèle au système à diffusion de chaleur 1 et une vanne mélangeuse 23 à l'une des extrémités de ce conduit 22, ainsi qu'une pompe 24 montée sur la branche 9 entre la vanne 6 et la portion 9a et une pompe 26 montée sur le conduit 14 entre la vanne 23 et le système à diffusion de chaleur 1.

L'installation de chauffage représentée sur la figure 2 comprend en outre un ballon d'eau sanitaire 36 comprenant à sa partie inférieure un conduit 37 d'alimentation en eau sanitaire et à sa partie supérieure un conduit 38 d'évacuation de l'eau sanitaire.

Le ballon 36 comprend une cloison intérieure 39 disposée verticalement et délimitant dans ce ballon 36 deux compartiments 40 et 41. Dans l'exemple représenté, les compartiments 40 et 41 peuvent communiquer à leur partie inférieure par un passage 42 et à leur partie supérieure par un passage 43.

La portion 8b de ladite boucle se présente sous la forme d'un serpentin qui est disposé à l'intérieur du compartiment 40 du ballon 36 pour que l'eau de transfert de chaleur de la portion 8b soit associée thermiquement à l'eau sanitaire contenue dans le ballon 36. Un conduit de dérivation 44 est branché sur la partie 8 de ladite boucle en parallèle à la portion 8b en des points de jonction 45 et 46, le point de jonction 45 étant entre le point de jonction 34 et la portion 8b de la boucle tandis que le point de jonction 46 est entre le point de jonction 35 et la portion 8b. Au point de jonction 46 est montée une vanne à trois voies 47 qui permet de faire circuler l'eau de transfert de chaleur soit dans la portion 8b soit dans le conduit de dérivation 44, les points de jonction 34 et 45 pouvant alors se confondre.

De la même manière que dans l'exemple précédent mais montée en partie différemment, l'installation de chauffage représentée sur la figure 2 comprend également une pompe à chaleur repérée d'une manière générale par la référence 48.

La pompe à chaleur 48 comprend un évaporateur 49 qui est thermiquement associé, de la même manière que dans l'exemple représenté sur la figure 1, à un conduit 18, 18a, le conduit 18 étant branché sur la branche 8 entre le point de jonction 35 et la portion 8a tandis que le conduit 18a est branché sur la branche 8 entre le point de jonction 34 et la portion 9a. Il est également prévu un conduit de retour direct 20 sur lequel est monté une vanne 21 qui peut être pivotée par la température de l'évaporateur afin de maintenir cette température à une valeur convenable et une pompe 27 permettant la circulation de l'eau dans le conduit 18, 18a et dans le conduit 20. Une vanne à trois voies 19 est également prévue à la jonction entre le conduit 18a et la branche 8 de la boucle.

La pompe à chaleur 48 comprend également un condenseur 50 se présentant sous la forme d'un serpentin qui est disposé dans le compartiment 41 du ballon 36 pour être associé thermiquement à l'eau sanitaire contenue dans le ballon.

Afin de ne pas se répéter, on va décrire ci-après le fonctionnement de l'installation de chauffage représentée sur la figure 2 en se référant aux modes de circulation de l'eau de transfert de chaleur et aux échanges de chaleur possibles à partir de ces modes de circulation décrits à propos de l'installation de chauffage représentée sur la figure 1 et non limitatifs et on notera que la vanne 47 et le conduit de dérivation 44 de l'installation représentée sur la figure 2 remplissent les fonctions que remplissaient le conduit 12 et la pompe 25 de l'installation de chauffage représentée sur la figure 1.

Pour obtenir le premier, le deuxième et le troisième modes de circulation de l'exemple précédent, il suffit de régler les vannes 6, 7 et 19 comme précédemment et de régler la vanne 47 de telle sorte que l'eau de transfert de chaleur circule dans le conduit de dérivation 44 et non dans la portion 8b.

De la même manière que précédemment, le troisième mode de circulation convient pour le transfert direct de chaleur du capteur solaire 4 au moyen de stockage 5 en actionnant la pompe 24.

A partir de l'un de ces trois premiers modes de circulation, il est possible comme précédemment de chauffer l'eau du ballon 36 et d'utiliser le système à diffusion de la chaleur 1, séparément ou conjointement.

En effet, pour chauffer l'eau du ballon 36, il suffit d'actionner la vanne 47 pour que, grâce à la pompe 24, l'eau de transfert de chaleur circule dans la portion 8b disposée dans le compartiment 40 du ballon 36 et non dans le conduit de dérivation 44 et pour la production de chaleur grâce au système à diffusion de chaleur 1, on actionne, comme précédemment, la pompe 26 et la vanne mélangeuse 23.

Les quatrième, cinquième et sixième modes de circulation de l'exemple précédent peuvent s'appliquer directement à l'installation de chauffage représentée sur la figure 2 en réglant les vannes 6, 9 et 19 comme précédemment et en actionnant la pompe 24. On notera cependant que dans ces modes de circulation, on évite à la fois la portion 8b de la branche 8 et le conduit de dérivation 44.

Ces quatrième, cinquième et sixième modes de circulation peuvent servir, comme précédemment, à échauffer la température de l'eau sanitaire contenue dans le ballon 36 ou permettent d'utiliser le système à diffusion de chaleur 1 ou les deux à la fois, en faisant fonctionner la pompe à chaleur 48. En effet, on peut chauffer l'eau sanitaire contenue dans le ballon 36 simplement en actionnant la pompe à chaleur 48 compte tenu du fait que son évaporateur 50 est placé dans le compartiment 41 du ballon 36.

Pour la production de chaleur dans le système à diffusion de chaleur 1, il suffit, dans cet exemple, de régler la vanne 47 de telle sorte que l'eau de transfert de chaleur puisse circuler dans la portion 8b et non dans le conduit de dérivation 44 et d'actionner la pompe 26 et la vanne mélangeuse 23 ainsi que la pompe à chaleur 48, l'eau de transfert de chaleur circulant alors dans un deuxième circuit traversant le système à diffusion de chaleur 1 et la portion 8b. En effet, l'échange de chaleur entre le condenseur 50 de la pompe à chaleur 48 et la portion 8b peut s'effectuer par l'intermédiaire de l'eau sanitaire contenue dans le ballon 36, cette eau étant mise en mouvement à l'intérieur du ballon 36 simplement par thermosyphon en s'écoulant d'un compartiment à l'autre par le passage inférieur 42 et le passage supérieur 43.

On peut noter, de la même manière que dans l'exemple précédent représenté sur la figure 1, que l'on peut soit chauffer le moyen de stockage 5 si cela est possible soit récupérer sa chaleur.

Comme dans l'exemple précédent, les modes de circulation et les échanges de chaleur possibles qui viennent d'être décrits en référence à la figure 2 ne peuvent être considérés comme limitatifs, d'autres modes de circulation et d'autres échanges de chaleur pouvant être envisagés en combinant les modes de circulation et les échanges de chaleur ci-dessus.

Pour la mise en œuvre de l'installation de chauffage représentée sur la figure 2, on prévoit de préférence un dispositif électrique ou électronique pour la commande convenable des vannes 6, 7, 19, 21, 23 et 47, des pompes 24, 26 et 27 et de la pompe à chaleur 48, en fonction des modes de circulation de l'eau de transfert de chaleur désirés et possibles. Ce dispositif électrique ou électronique de commande de l'installation de chauffage pourra être automatisé et choisir le mode de circulation de l'eau de transfert de chaleur en fonction de la température des différents éléments de l'installation et/ou en fonction des différences de températures existant entre ces éléments en vue des transferts de chaleur possibles et souhaités.

Dans ce but, on a prévu dans l'installation de chauffage représentée sur la figure 2, comme dans l'installation de chauffage représentée sur la figure 1, une sonde de température 28 dans le ballon d'eau sanitaire 36, une sonde de température 29 dans le moyen de stockage 5, une sonde de température 30 dans la source de chaleur 4, une sonde de température 31 indiquant la température de l'eau de transfert de chaleur dans la partie 8c juste en amont de la portion 8a de la boucle et une sonde de température 33 située sur le conduit 14 à l'entrée du système à diffusion de chaleur 1. Le dispositif de commande électrique ou électronique pourrait être également soumis à d'autres températures si cela s'avérait nécessaire.

La présente invention ne se limite évidemment pas aux deux exemples décrits ci-dessus. On peut en effet modifier leur structure par exemple en changeant la position des différentes vannes ou la position des pompes sans pour autant modifier leur fonctionnement. On peut également prévoir, dans l'exemple représenté sur la figure 2, un ballon d'eau sanitaire présentant une structure nettement différente tout en permettant un échange de chaleur entre l'évaporateur 50 de la pompe à chaleur 48 et la portion 8b traversée par l'eau de transfert de chaleur. On peut en outre remplacer les pompes à chaleur 15 et 48 par, par exemple, une chaudière ou un élément chauffant d'un type classique.

**Revendications**

1. Installation de chauffage notamment pour la production de chaleur dans un système à diffusion de chaleur (1) pour le chauffage de locaux et pour la production d'eau chaude sanitaire stockée dans un ballon (3), comprenant au moins une source de chaleur formée par des capteurs solaires (4), au moins une source de chaleur auxiliaire et au moins un moyen pour le stockage de chaleur (5) pouvant être restitués ultérieurement, installation comprenant un conduit formant une boucle (8, 9) dans laquelle un fluide caloporteur tel que de l'eau mis en mouvement en circuit fermé peut circuler dans un sens, ledit conduit en forme de boucle (8, 9) présentant une première portion (8a) aux extrémités de laquelle est branché en dérivation un conduit (10) permettant audit fluide d'être associé thermiquement à ladite source de chaleur (4) en vue de faire circuler ledit fluide soit dans ladite première portion (8a) soit dans ce conduit (10) de dérivation, une seconde portion (9a) disposée dans le sens de circulation du fluide dans ladite boucle en aval de ladite première portion (8a) et aux extrémités de laquelle est branché en dérivation un conduit (11) permettant audit fluide d'être associé thermiquement audit moyen de stockage (5) en vue de faire circuler ledit fluide soit dans ladite seconde portion (9a) soit dans ce conduit (11) de dérivation, une pompe (24) entraînant ledit fluide caloporteur étant montée sur ledit conduit formant une boucle (8, 9) en un endroit de ce conduit où le fluide est continuellement en circulation lors des transferts de chaleur, caractérisé par le fait que ladite boucle (8, 9) comprend une troisième portion (8b) située entre lesdites première et seconde portions en aval de ladite seconde portion (9a), un conduit (14) permettant audit fluide d'être associé thermiquement audit système à diffusion de chaleur (1) étant branché sur ledit conduit formant une boucle (8, 9) en parallèle ou en dérivation à ladite troisième portion (8b) pour que ledit fluide puisse circuler dans ladite troisième portion et/ou dans ledit conduit (14) associé audit système à diffusion de chaleur (1), ladite troisième portion (8b) étant associée thermiquement à l'eau sanitaire dudit ballon en vue d'échanges de chaleur entre le fluide circulant dans la troisième portion (8b) de ladite boucle et l'eau sanitaire du ballon quand ledit fluide circule dans ladite troisième portion (8b), ladite source de chaleur auxiliaire étant formée par une pompe à chaleur (15, 48) dont le condenseur (16, 50) est associé thermiquement à l'eau sanitaire et dont l'évaporateur (17, 49) est associé thermiquement audit fluide par l'intermédiaire d'un conduit (18, 18a) branché sur ledit conduit formant une boucle (8, 9) d'une part entre ladite seconde portion (9a) du conduit formant une boucle et la jonction entre ce conduit formant une boucle (8, 9) et le conduit (14) associé thermiquement au système à diffusion de chaleur la plus proche et d'autre part entre l'autre jonction entre le conduit formant une boucle (8, 9) et le conduit (14) associé thermiquement au système à diffusion de chaleur (1) et ladite première portion (8a) du conduit formant une boucle (8, 9).

2. Installation de chauffage selon la revendication 1, caractérisée par le fait que ladite troisième portion de ladite boucle forme avec un conduit ou circuit de circulation (12) extérieur audit ballon un échangeur de chaleur (13) en vue d'échanges de chaleur entre le fluide circulant dans ladite troisième portion (8b) et l'eau sanitaire, une pompe (25) étant montée sur ledit conduit ou circuit (12) d'eau sanitaire extérieur au ballon pour la mise en mouvement de l'eau sanitaire dans ledit échangeur (13).

3. Installation de chauffage selon la revendication 2, caractérisée par le fait que ledit condenseur est branché sur ledit conduit de circulation (12).

4. Installation de chauffage selon la revendication 1, caractérisée par le fait que ladite troisième portion (8b) est disposée à l'intérieur dudit ballon (36) en vue d'échanges de chaleur entre l'eau et ledit fluide et qu'un conduit de dérivation (44) est branché aux extrémités de cette troisième portion (8b) en vue de faire circuler ledit fluide soit dans ce conduit de dérivation (44) soit dans ladite troisième portion (8b).

5. Installation de chauffage selon la revendication 4, caractérisée par le fait que ledit ballon (36) comprend une cloison intérieure (39) délimitant deux compartiments (40, 41) dont l'un comprend ledit condenseur (50) et dont l'autre comprend ladite troisième portion (8b), ladite cloison (39) permettant un mouvement réciproque de l'eau d'un compartiment à l'autre par thermosyphon à l'intérieur dudit ballon.

6. Installation de chauffage selon la revendication 5, caractérisée par le fait que lesdits compartiments intérieurs dudit ballon communiquent à leur partie inférieure et à leur partie supérieure.

7. Installation de chauffage selon la revendication 1, caractérisée par le fait qu'une vanne (19) du type à deux directions de circulation et à trois voies est montée à l'une des jonctions entre ledit conduit formant une boucle (8, 9) et ledit conduit (18a) associé thermiquement à l'évaporateur (17, 49) de ladite pompe à chaleur (15, 48) dans le but de faire circuler ledit fluide soit dans ladite troisième portion (8b) soit dans ce conduit (18, 18a) associé à l'évaporateur (17, 49) de la pompe à chaleur (15, 48).

8. Installation de chauffage selon la revendication 1, caractérisée par le fait que les branches dudit conduit (18, 18a) associé thermiquement à l'évaporateur (17, 49) qui sont extérieures à cet évaporateur sont reliées par un conduit de retour direct (20) sur lequel est montée une vanne (21) pilotée par la température de l'évaporateur afin de maintenir cette température à une valeur convenable, une pompe (27) entraînant ledit fluide étant disposée sur ledit conduit (18a) associé thermiquement à l'évaporateur (17, 49) de la pompe à chaleur (15, 48) entre l'une des jonctions entre ce conduit (18a) et ledit conduit de retour direct (20) et l'évaporateur (17) de la pompe à chaleur (15, 48).

9. Installation de chauffage selon l'une quelconque des revendications précédentes, caractérisée par le fait que ledit système à diffusion de chaleur (1) est formé par des éléments montés sur le conduit (14) associé à ce système, un conduit de retour direct (22) étant branché sur ce conduit (14) en parallèle audit système, une vanne mélangeuse (23) étant installée à l'une des jonctions entre ledit conduit associé audit système et ce conduit de retour direct et une pompe (26) entraînant ledit fluide étant disposée sur ledit conduit associé audit système entre la jonction entre ledit conduit de retour direct et le conduit associé audit système et ledit système.

10. Installation de chauffage selon l'une quelconque des revendications précédentes, caractérisée par le fait qu'elle comprend des sondes de température pour mesurer notamment la température de la source de chaleur, la température du moyen de stockage, la température du fluide juste en amont de ladite première portion, la température à l'entrée du système à diffusion de chaleur et la température de l'eau sanitaire dans ledit ballon, en vue de commander grâce à un dispositif électrique ou électronique automatique, les vannes et les pompes de l'installation de chauffage pour effectuer les transferts de chaleur désirés et possibles.

## Claims

1. Heating installation in particular for producing heat in a heat-distribution system (1) for heating rooms and for producing domestic hot water stored in a tank (3), comprising at least one heat source consisting in solar sensors (4), at least one auxiliary heat source and at least one means (5) for storing heat which can be subsequently re-distributed, the said installation comprising a pipe forming a loop (8, 9) inside which a heat-exchanging fluid such as water circulated in a closed circuit is able to flow in one direction, the said pipe in the form of a loop (8, 9) having a first section (8a) at the ends of which a pipe (10) is oranched off, which pipe allows the said fluid to be thermally associated with the said heat source (4) so as to cause the said fluid to flow either inside the said first section (8a) or inside this branched-off pipe (10), a second section (9a) which is arranged in the direction of flow of the fluid inside the said loop, downstream of the said first section (8a), and at the ends of which a pipe (11) is branched off, which pipe allows the said fluid to be thermally associated with the said storage means (5) so as to cause the said fluid to flow either inside the said second section (9a) or inside this branched-off pipe (11), a pump (24), which propels the said heat-exchanging fluid, being mounted on the said pipe forming a loop (8, 9) at a point along this pipe where the fluid is continually flowing during heat transfer, characterised in that the said loop (8, 9) comprises a third section (8b) located between the said first and second sections, downstream of the said second section (9a), a pipe (14) allowing the said fluid to be thermally associated with the said heat-distribution system (1) being connected in parallel to the said pipe forming a loop (8, 9) or being branched off from the said third section (8b) so that the said fluid is able to flow inside the said third section and/or inside the said pipe (14) associated with the said heat-distribution system (1), the said third section (8b) being thermally associated with the domestic water of the said tank for the purpose of heat exchange between the fluid flowing inside the third section (8b) of the said loop and the domestic water of the tank when the said fluid flows inside the said third section (8b), the said auxiliary heat source consisting in a heat pump (15, 48), the condenser (16, 50) of which is thermally associated with the domestic water and the evaporator (17, 49) of which is thermally associated with the said fluid by means of a pipe (18, 18a) which is connected to the said pipe forming a loop (8, 9), on the one hand, between the said second section (9a) of the pipe forming a loop and the junction between this pipe forming a loop (8, 9) and pipe (14) thermally associated with the closest heat-distribution system and, on the other hand, between the other junction between the pipe forming a loop (8, 9) and the pipe (14) thermally associated with the heat-distribution system (1) and the said first section (8a) of the pipe forming a loop (8, 9).

2. Heating installation according to Claim 1, characterised in that the said third section of the said loop forms, together with a flow pipe or circuit (12) located outside the said tank, a heat exchanger (13) for the purpose of heat exchange between the fluid flowing inside the said third section (8b) and the domestic water, a pump (25) being mounted on the said domestic-water pipe or circuit (12) located outside the tank, for circulating the domestic water inside the said exchanger (13).

3. Heating installation according to Claim 2, characterised in that the said condenser is connected to the said flow pipe (12).

4. Heating installation according to Claim 1, characterised in that the said third section (8b) is arranged inside the said tank (36) for the purpose of heat exchange between the water and the said fluid and in that a pipe (44) is branched off from the ends of this third section (8b) so as to cause the said fluid to flow either inside this branched-off pipe (44) or inside the said third section (8b).

5. Heating installation according to Claim 4, characterised in that the said tank (36) comprises an internal partition (39) defining two compartments (40, 41), one of which contains the said condenser (50) and the other of which contains the said third section (8b), the said partition (39) allowing the water to pass from one compartment to another by means of a thermosyphon inside the said tank.

6. Heating installation according to Claim 5, characterised in that the said internal compartments of the said tank communicate with each other at the top and at the bottom.

7. Heating installation according to Claim 1, characterised in that a bi-directional three-way valve is mounted at one of the junctions between the said pipe forming a loop (8, 9) and the said pipe (18a) thermally associated with the evaporator (17, 49) of the said heat pump (15, 48) so as to cause the said fluid to flow either inside the said third section (8b) or inside this pipe (18, 18a) associated with the evaporator (17, 49) of the heat pump (15, 48).

8. Heating installation according to Claim 1, characterised in that the branches of the said pipe (18, 18a) thermally associated with the evaporator (17, 49), which are outside this evaporator, are connected by means of a direct-return pipe (20) on which a valve (21) is mounted, which valve is controlled by the temperature of the evaporator so as to keep the temperature at a suitable value, a pump (27) propelling the said fluid being arranged on the said pipe (18a) thermally associated with the evaporator (17, 49) of the heat pump (15, 48) between one of the junctions between this pipe (18a) and the said direct-return pipe (20) and the evaporator (17) of the heat pump (15, 48).

9. Heating installation according to any one of the preceding claims, characterised in that the said heat-distribution system (1) consists of components mounted on the pipe (14) associated with this system, a direct-return pipe (22) being connected to this pipe (14) in parallel with the said system, a mixing valve (23) being installed at one of the junctions between the said pipe associated with the said system and this direct-return pipe and a pump (26) propelling the said fluid being arranged on the said pipe associated with the said system between the junction between the said direct-return pipe and the pipe associated with the system and the said system.

10. Heating installation according to any one of the preceding claims, characterised in that it comprises temperature probes for measuring, in particular, the temperature of the heat source, the temperature of the storage means, the temperature of the fluid located just upstream of the said first section, the temperature at the inlet of the heat-distribution system and the temperature of the domestic water inside the said tank, with a view to operating, by means of an automatic electric or electronic device, the valves and pumps of the heating installation so as to effect the desired and possible heat exchange.

**Patentansprüche**

1. Heizungsanlage, insbesondere für die Wärmeerzeugung in einem Wärmeverteilungsnetz (1) zum Beheizen von Räumen und für die Bereitung von in einem Behälter (3) gespeichertem Brauchwarmwasser, mit mindestens einer durch Sonnenkollektoren (4) gebildeten Wärmequelle, mindestens einer Hilfswärmequelle und mindestens einer Einrichtung (5) zum Speichern von Wärme, die später wieder zurückgeliefert werden kann, wobei die Anlage eine Leitungsschleife (8, 9) aufweist, in welcher ein in einen geschlossen Kreislauf gebrachter Wärmeträger, etwa Wasser, in einer Richtung umlaufen kann und wobei die Leitungsschleife (8, 9) einen ersten Abschnitt (8a) aufweist, an dessen Enden im Nebenschluß eine Leitung (10) angeschlossen ist, die es dem Fluid ermöglicht, in Wärmeverbindung mit der Wärmequelle (4) zu stehen, um das Fluid entweder in dem ersten Leitungsabschnitt (8a) oder in der Nebenschlußleitung (10) fließen zu lassen, ferner einen zweiten Abschnitt (9a), der in Fließrichtung des Fluids in der Schleife stromab von dem ersten Abschnitt (8a) angeordnet ist und an dessen Enden im Nebenschluß eine Leitung (11) angeschlossen ist, die es dem Fluid ermöglicht, in Wärmeverbindung mit der Speichereinrichtung (5) zu stehen, um das Fluid entweder in dem zweiten Abschnitt (9a) oder in der Nebenschlußleitung (11) fließen zu lassen, und wobei schließlich eine das Wärmeträgerfluid fördernde Pumpe (24) in die Leitungschleife (8, 9) an einer Stelle dieser Leitung eingeschaltet ist, wo das Fluid sich bei der Wärmeübertragung ständig bewegt, dadurch gekennzeichnet, daß die Leitungsschleife (8, 9) einen dritten Abschnitt (8b) aufweist, der zwischen dem ersten und dem zweiten Abschnitt stromab von dem zweiten Abschnitt (9a) liegt, wobei eine Leitung (14) es dem Fluid ermöglicht, in Wärmeverbindung mit dem Wärmeverteilungsnetz (1) zu stehen, das parallel oder im Nebenschluß zu dem dritten Abschnitt (8b) an die Leitungsschleife (8, 9) angeschlossen ist, damit das Fluid in dem dritten Abschnitt und/oder der Leitung (14), die mit dem Wärmeverteilungsnetz (1) verbunden ist, fließen kann, daß der dritte Abschnitt (8b) in Wärmeverbindung mit dem Brauchwasser des Behälters steht, um einen Wärmeaustausch zwischen dem in dem dritten Abschnitt (8b) der Schleife fließenden Fluid und dem Brauchwasser des Behälters herbeizuführen, wenn das Fluid in dem dritten Abschnitt (8b) fließt, daß die Hilfswärmequelle als Wärmepumpe (15, 48) ausgebildet ist, deren Kondensator (16, 50) mit dem Brauchwasser in Wärmeverbindung steht und deren Verdampfer (17, 49) mit dem Fluid in Wärmeverbindung durch eine Leitung (18, 18a) steht, die an die Leitungsschleife (8, 9) einerseits zwischen dem zweiten Abschnitt (9a) der Leitungsschleife und der nächstgelegenen Verbindungsstelle dieser Leitungsschleife (8, 9) mit der in Wärmeverbindung mit dem Wärmeverteilungsnetz stehenden Leitung (14) angeschlossen ist und andererseits zwischen der anderen Verbindungsstelle der Leitungsschleife (8, 9) mit der in Wärmeverbindung mit dem Wärmeverteilungsnetz stehenden Leitung (14) und dem ersten Abschnit (8a) der Leitungsschleife (8, 9).

2. Heizanlage nach Anspruch 1, dadurch gekennzeichnet, daß der dritte Abschnitt (8b) der Leitungsschleife mit einer Umlaufleitung oder einem Umlaufkreis (12), der außerhalb des Behälters liegt, einen Wärmeaustauscher (13) bildet, um Wärme zwischen dem in dem dritten Abschnitt (8b) fließenden Fluid und dem Brauchwasser auszutauschen, und daß eine Pumpe (25) in der Brauchwasser-Umlaufleitung oder dem Umlaufkreis (12) außerhalb des Behälters angeordnet ist, um das Brauchwasser in dem Wärmeaustauscher (13) in Bewegung zu setzen.

3. Heizanlage nach Anspruch 2, dadurch gekennzeichnet, daß der Kondensator in die Umlaufleitung (12) geschaltet ist.

4. Heizanlage nach Anspruch 1, dadurch gekennzeichnet, daß der dritte Abschnitt (8b) sich innerhalb des Behälters (36) befindet, um einen Wärmeaustausch zwischen dem Wasser und dem Fluid herbeizuführen, und daß eine Nebenschlußleitung (44) an die Enden des dritten Abschnitts (8b) angeschlossen ist, um das Fluid entweder in der Nebenschlußleitung (44) oder in dem dritten Abschnitt (8b) fließen zu lassen.

5. Heizanlage nach Anspruch 4, dadurch gekennzeichnet, daß der Behälter (36) eine innenliegende Trennwand (39) aufweist, die zwei Abteile (40, 41) entstehen läßt, von denen das eine den Kondensator (50) enthält und das andere den dritten Abschnitt (8b), wobei die Trennwand (39) durch Thermosyphonwirkung eine wechselseitige Bewegung des Wassers von dem einen Abteil in das andere im Inneren des Behälters ermöglicht.

6. Heizanlage nach Anspruch 5, dadurch gekennzeichnet, daß die Innenabteile des Behälters in ihrem unteren und ihrem oberen Teil miteinander verbunden sind.

7. Heizanlage nach Anspruch 1, dadurch gekennzeichnet, daß ein Zweirichtungs-Dreiwegeventil (19) an der einen Anschlußstelle zwischen der Leitungsschleife (8, 9) und der mit dem Verdampfer (17, 49) der Wärmepumpe (15, 48) in Wärmeverbindung stehenden Leitung (18a) angeordnet ist, um das Fluid entweder in den dritten Abschnitt (8b) oder in die mit dem Verdampfer (17, 49) der Wärmepumpe (15, 48) in Wärmeverbindung stehende Leitung (18, 18a) fließen zu lassen.

8. Heizanlage nach Anspruch 1, dadurch gekennzeichnet, daß die Zweige der mit dem Verdampfer (17, 49) in Wärmeverbindung stehenden Leitung (18, 18a), die außerhalb des Verdampfers liegen, durch eine Direktrücklaufleitung (20) miteinander verbunden sind, in der ein Ventil (21) liegt, das durch die Verdampfertemperatur gesteuert wird, damit diese Temperatur auf einem geeigneten Wert gehalten wird, und daß eine das Fluid fördernde Pumpe (27) in der mit dem Verdampfer (17, 49) der Wärmepumpe (15, 48) in Wärmeverbindung stehenden Leitung (18a) zwischen der einen Verbindungsstelle dieser Leitung (18a) mit der Direktrücklaufleitung (20) und dem Verdampfer (17) der Wärmepumpe (15, 48) angeordnet ist.

9. Heizanlage nach einem der vorhergehenden Ansprüche, dadurch gekennzeichnet, daß das Wärmeverteilungsnetz (1) durch an der mit diesem Netz verbundenen Leitung (14) angeordnete Elemente gebildet ist, daß eine Direktrücklaufleitung (22) an die Leitung (14) parallel zu dem Netz angeschlossen ist, daß ein Mischventil (23) an einer der Anschlußstellen der mit dem Netz verbundenen Leitung an die Direktrücklaufleitung angeordnet ist, und daß eine das Fluid fördernde Pumpe (26) in der mit dem Netz verbundenen Leitung zwischen der Anschlußstelle der Direktrücklaufleitung an die mit dem Netz verbundene Leitung und dem Netz angeordnet ist.

10. Heizanlage nach einem der vorhergehenden Ansprüche, dadurch gekennzeichnet, daß Temperaturfühler vorgesehen sind zum Messen insbesondere der Temperatur der Wärmequelle, der Temperatur des Speichermediums, der Temperatur des knapp stromauf von dem ersten Abschnitt befindlichen Fluids, der Temperatur am Eingang des Wärmeverteilungsnetzes und der Temperatur des Brauchwassers in dem Behälter, um mit Hilfe einer automatisch arbeitenden elektrischen oder elektronischen Vorrichtung die Ventile und die Pumpen der Heizanlage zu steuern und dadurch die gewünschte und mögliche Wärmeübertragung herbeizuführen.

FIG.1

FIG.2